# EUROPEAN PATENT APPLICATION

(11) **EP 0 875 465 A1**
(43) Date of publication of application: **04.11.1998**
(21) Application number: 97201291.8
(22) Date of filing: 29.04.1997
(51) Int. Cl.: B65D 47/42, G01F 11/26, A47L 23/05

(54) **Metering applicator for liquids**

(71) Applicant: Sara Lee/DE N.V., 3532 AA Utrecht (NL)
(72) Inventor: Kuhn, Petrus Henricus Aloysius Nicolaas, 2565 HC Den Haag (NL); Colenbrander, Wander Herman, 2512 EC Den Haag (NL)
(74) Representative: Smulders, Theodorus A.H.J., Ir.

(57) **Abstract**

A metering applicator (1) comprising a liquid container (2) including a reservoir space (3), the metering applicator (1) comprising a buffer chamber (4) having a buffer chamber inflow opening (5), via which the buffer chamber (4) can be brought into fluid communication with the reservoir space (3), and having a buffer chamber outflow opening (6), via which the buffer chamber (4) can be brought into fluid communication with an applicator sponge (7), wherein the buffer chamber inflow opening (5) is closable with a first plunger (8), and the buffer chamber outflow opening (6) is closable with a second plunger (9), the metering applicator (1) being so constructed that either the buffer chamber inflow opening (5) or the buffer chamber outflow opening (6) is closed.

## Description

This invention relates to a metering applicator comprising a liquid container which includes a reservoir space, the metering applicator comprising a buffer chamber having a buffer chamber inflow opening, via which the buffer chamber can be brought into fluid communication with the reservoir space, and having a buffer chamber outflow opening, via which the buffer chamber can be brought into fluid communication with an applicator sponge.

Such a metering applicator is known from NL-A-9201862. The known metering applicator is suitable in particular for the application of liquids with a low viscosity, such as, for instance, self-shine shoe polish which is watery. With the known metering applicator it is possible to apply the liquid in a very thin layer, which in the case of self-shine shoe polish leads to an optimum shine result.

Although the known metering applicator in most cases prevents an unduly thick layer of, for instance, self-shine shoe polish from being applied, it may yet happen under certain circumstances that too much liquid is dispensed. This is specifically the case when on the sponge a compressive force is exerted which is such that the buffer chamber inflow opening as well as the buffer chamber outflow opening are both opened, so that the reservoir space is in direct fluid communication with the applicator sponge.

The object of the invention is to provide a metering applicator of the above-mentioned type, which provides the advantages of the known metering applicator and which does not entail the disadvantage of the known metering applicator.

To that end, the metering applicator is characterized, according to the invention, in that the buffer chamber inflow opening is closable with a first plunger and the buffer chamber outflow opening is closable with a second plunger, the metering applicator being so constructed that either the buffer chamber inflow opening or the buffer chamber outflow opening is closed.

With a metering applicator of such construction, the possibility that a direct fluid communication is created between the reservoir space and the applicator sponge is prevented. As a consequence of the fact that use is made of plungers, in each case the same amount of liquid is dispensed from the buffer chamber to the applicator sponge. Draining the reservoir space by exerting a certain compressive force on the applicator sponge is not possible with the device according to the invention.

Preferably, the first plunger is arranged for driving the liquid from the buffer chamber into the applicator sponge. This can be realized, for instance, in that the first plunger has a cross-sectional surface which is receivable in the buffer chamber with a proper fit. This implies that the first plunger is then also arranged for drawing air from the surroundings into the buffer chamber, until the second plunger shuts off the buffer chamber outflow opening.

With an applicator of such design, in each case the same amount of liquid is dispensed batchwise from the buffer chamber.

According to a further elaboration of the invention, the first and the second plunger are designed in one piece and they preferably form part of a first moulding which is fixedly connected to the liquid container.

What is accomplished with such a construction is that the position of the two plungers relative to each other is always the same and that the plunger assembly can be manufactured economically.

According to a further elaboration of the invention, the buffer chamber is formed in a second moulding, which is slidably connected with the liquid container and to which further the applicator sponge is attached. Thus the metering applicator comprises only two functional parts, viz. a liquid container with a first moulding fixedly connected thereto and a second moulding slidably connected to the liquid container. Such a metering applicator can be manufactured economically. Thus, the two mouldings and the liquid container can be manufactured, for instance, by a moulding or injection moulding process.

According to a further elaboration of the invention, the second moulding is biased into a first position under spring action of spring means, in which first position the buffer chamber is in fluid communication with the reservoir space via the buffer chamber inflow opening, and the buffer chamber outflow opening is closed off by the second plunger, and the second moulding can be brought into a second position by exerting pressure on the applicator sponge, in which second position the buffer chamber inflow opening is closed by the first plunger and the buffer chamber is in fluid communication with the applicator sponge via the buffer chamber outflow opening.

When the metering applicator is held with the applicator sponge directed downwards, the liquid flows from the reservoir space via the buffer chamber inflow opening into the buffer chamber. As a result of an exertion of pressure on the applicator sponge, the second moulding will slide relative to the first moulding, against the spring action of the spring means mentioned, whereby first the first plunger will shut off the buffer chamber inflow opening and thereupon the second plunger will clear the buffer chamber outflow opening, whereafter the liquid can flow from the buffer chamber to the applicator sponge. When subsequently the pressure exerted on the applicator sponge is removed, the second moulding, under the action of the spring means, will move back to the first position and the buffer chamber can fill up with liquid again via the buffer chamber inflow opening.

In order to further limit the number of parts, it is particularly advantageous when the spring means form an integral part of the second moulding.

Optionally, the applicator sponge can be provided with a liquid chamber which can be brought into fluid communication with the buffer chamber via the buffer chamber outflow opening and which is arranged for receiving liquid coming from the buffer chamber. What is thus accomplished is that the liquid that is driven from the buffer chamber by the first plunger does not experience undue resistance upon penetrating the applicator sponge.

To clarify the invention, an exemplary embodiment of the metering applicator will be described with reference to the drawings.
Fig. 1 shows a longitudinal section of the metering applicator, with the second moulding in the first position;
Fig. 2 shows a similar section, with the second moulding in an intermediate position; and
Fig. 3 shows a similar section, with the second moulding in a second position.

The exemplary embodiment depicted shows a metering applicator 1 comprising a liquid container 2, which liquid container includes a reservoir space 3. The metering applicator further comprises a buffer chamber 4 with a buffer chamber inflow opening 5 via which the buffer chamber 4 can be brought into fluid communication with the reservoir space 3. The buffer chamber 4 further has a buffer chamber outflow opening 6, via which the buffer chamber 4 can be brought into fluid communication with an applicator sponge 7. The buffer chamber inflow opening 5 is closable with a first plunger 8. The buffer chamber outflow opening 6 is closable with a second plunger 9. The metering applicator 1 is so designed that at any time either the buffer chamber inflow opening 5 or the buffer chamber outflow opening 6 is closed. The first plunger 8 and the second plunger 9 are designed as one whole and form part of a first moulding 10 which is fixedly connected with the liquid container 2.

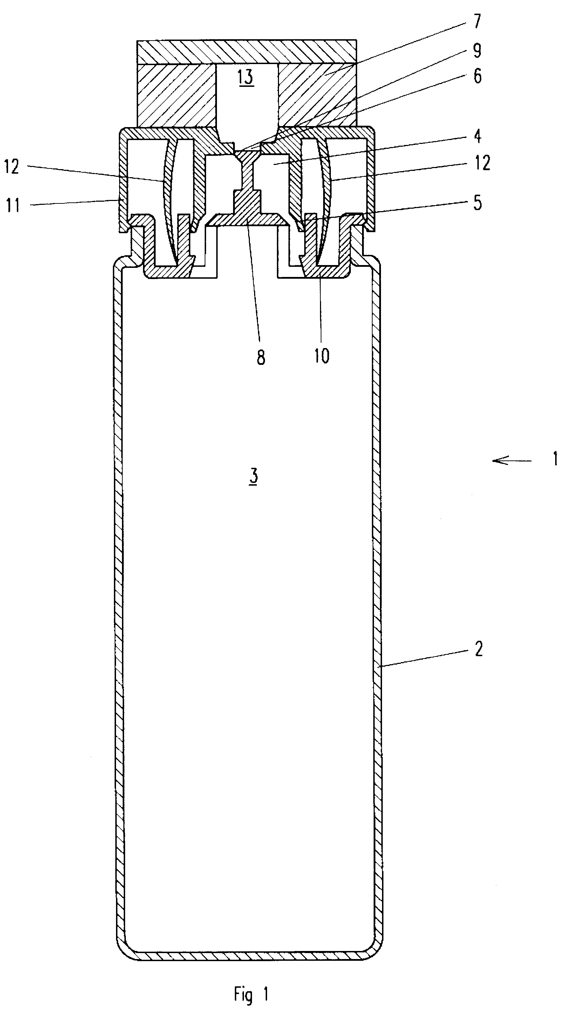

The buffer chamber 4 is formed in a second moulding 11 which is slidably connected with the liquid container 2 and which further has the applicator sponge attached to it. The second moulding further comprises spring means 12 which through spring action urge the second moulding 11 into a first position, which is represented in Fig. 1. In this first position, the buffer chamber 4 is in fluid communication with the reservoir space 3 via the buffer chamber inflow opening 5, and the buffer chamber outflow opening 6 is closed off by the second plunger 9.

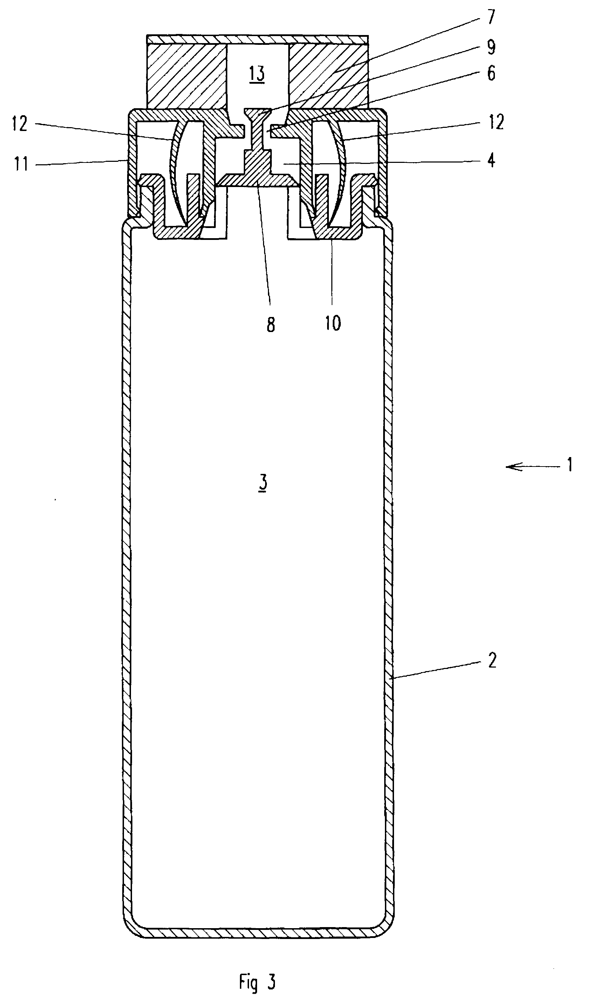

By applying pressure to the applicator sponge 7, the second moulding 11 can be brought into a second position, which second position is shown in Fig. 3. In this second position the buffer chamber inflow opening 5 is closed by the first plunger, and the buffer chamber 4 is in fluid communication with the applicator sponge 7 via the buffer chamber outflow opening 6. As is clearly visible in Fig. 3, the first plunger 8 moreover serves for driving the liquid from the buffer chamber 4 into the applicator sponge 7 as the second moulding 11 is being brought from the first position to the second position. In order to facilitate this expulsion of the liquid, the applicator sponge 7 is provided with a liquid chamber 13 which receives the liquid from the buffer chamber 4. During the return stroke of the second moulding 11 from the second position to the first position, air is drawn from the surroundings into the buffer chamber 4 by the first plunger 8, until the second plunger 9 shuts off the buffer chamber outflow opening 6.

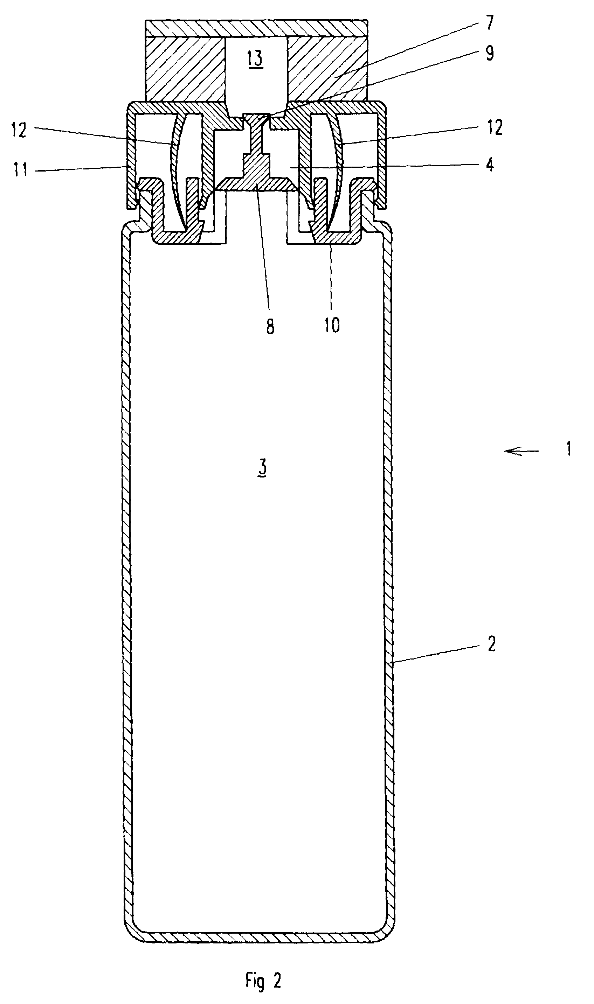

As is clearly represented in Fig. 2, where the second moulding 11 is in a position intermediate between the first and the second position, the position of the first plunger 8 and the second plunger 9 relative to the buffer chamber inflow opening 5 and the buffer chamber outflow opening 6, respectively, is so chosen that there is never a direct fluid communication between the reservoir space 3 and the applicator sponge 7. Thus, according to the invention, the possibility of the reservoir space 3 draining all at once when the second moulding 11 is in a certain intermediate position is prevented.

It will be clear that the invention is not limited to the exemplary embodiment described, but that various modifications are possible within the scope of the invention.

## Claims

1. A metering applicator (1) comprising a liquid container (2) which includes a reservoir space (3), the metering applicator (1) comprising a buffer chamber (4) having a buffer chamber inflow opening (5), via which the buffer chamber (4) can be brought into fluid communication with the reservoir space (3), and having a buffer chamber outflow opening (6), via which the buffer chamber (4) can be brought into fluid communication with an applicator sponge (7), characterized in that the buffer chamber inflow opening (5) is closable with a first plunger (8), and the buffer chamber outflow opening (6) is closable with a second plunger (9), the metering applicator (1) being so constructed that either the buffer chamber inflow opening (5) or the buffer chamber outflow opening (6) is closed.

2. A metering applicator according to claim 1, characterized in that the first plunger (8) is arranged for driving the liquid from buffer chamber (4) into the applicator sponge (7).

3. A metering applicator according to claim 1 or 2, characterized in that the first plunger (8) is arranged for drawing air from the surroundings into the buffer chamber (4), until the second plunger (9) shuts off the buffer chamber outflow opening (6).

4. A metering applicator according to any one of claims 1-3, characterized in that the first plunger (8) and the second plunger (9) are designed in one piece.

5. A metering applicator according to claim 4, characterized in that the first and the second plunger (8 and 9, respectively) form part of a first moulding (10) which is fixedly connected with the liquid container (2).

6. A metering applicator according to any one of the preceding claims, characterized in that buffer chamber (4) is formed in a second moulding (11) which is slidably connected with the liquid container (2) and to which further the applicator sponge (7) is attached.

7. A metering applicator according to claim 6, characterized in that the second moulding (11), under spring action of spring means (12), is biased into a first position (see Fig. 1), in which first position the buffer chamber (4) is in fluid communication with the reservoir space (3) via the buffer chamber inflow opening (5), while the buffer chamber outflow opening (6) is closed off by the second plunger (9); and the second moulding (11) can be brought into a second position (see Fig. 3) through exertion of pressure on the applicator sponge (7), in which second position the buffer chamber inflow opening (5) is closed by the first plunger (8) and the buffer chamber (4) is in fluid communication with the applicator sponge (7) via the buffer chamber outflow opening (6).

8. A metering applicator according to claim 5, characterized in that the spring means (12) form an integral part of the second moulding (11).

9. A metering applicator according to at least claims 5 and 6, characterized in that both the first and the second moulding (10 and 11, respectively) are manufactured through a moulding or injection moulding process.

10. A metering applicator according to any one of the preceding claims, characterized in that the applicator sponge (7) is provided with a liquid chamber (13) which can be brought into fluid communication with the buffer chamber (4) via the buffer chamber outflow opening (6) and which is arranged for receiving liquid coming from the buffer chamber (4).
